# FASCICULE DE BREVET EUROPEEN

(11) **EP 3 183 795 B1**
(45) Date de publication et mention de la délivrance du brevet: **05.12.2018**
(21) Numéro de dépôt: 15736567.7
(22) Date de dépôt: 23.06.2015
(51) Int. Cl.: H02J 7/02, B60L 11/18, B60L 15/08

(54) **CHARGEUR DE BATTERIE POUR UN VÉHICULE AUTOMOBILE ÉLECTRIQUE OU HYBRIDE À HAUTE INTÉGRATION**
BATTERIELADEGERÄT FÜR HOCHINTEGRIERTES ELEKTRISCHES ODER HYBRIDES KRAFTFAHRZEUG
BATTERY CHARGER FOR HIGH-INTEGRATION ELECTRIC OR HYBRID MOTOR VEHICLE

(30) Priorité: 19.08.2014 FR 1457876
(43) Date de publication de la demande: 28.06.2017
(73) Titulaire: Renault s.a.s, 92100 Boulogne-Billancourt (FR)
(72) Inventeur: SAKR, Nadim, 75014 Paris (FR); GASCHER, Alain, 92310 Sevres (FR)
(86) Numéro de dépôt international: PCT/FR2015/051662
(87) Numéro de publication internationale: WO 2016/027013

(56) Documents cités:
- FR-A1- 2 938 711
- US-A- 4 348 619
- US-A- 5 561 595

## Description

L'invention a pour domaine technique les chargeurs de batterie embarqués, et plus particulièrement de tels chargeurs réutilisant les composants d'alimentation électrique d'un moteur électrique.

Compte tenu de l'autonomie limitée et le temps élevé d'une charge complète, la charge des batteries d'un véhicule électrique demeure une des difficultés technologiques à surmonter pour un déploiement massif de ce type de véhicule.

Une solution consiste à intégrer le chargeur dans le véhicule en utilisant les éléments de la chaîne de traction pendant la charge.

De plus, un réseau d'alimentation électrique est employé pour charger la batterie, ce qui implique que les courants consommés doivent être sinusoïdaux et en phase avec les tensions du réseau. Si tel n'est pas le cas, le passage des courants harmoniques dans les impédances du réseau peut entraîner des tensions harmoniques aux points de raccordement dont les effets sont indésirables (échauffement, interférence avec les réseaux de télécommunication, défauts de fonctionnement de certains équipements électriques, risque d'excitation de résonance,...).

De l'état de la technique antérieure, on connait le document WO2010057893 qui décrit un chargeur de batteries de véhicule électrique utilisant la chaîne de traction comme dispositif de charge embarqué.

L'onduleur de traction est réalisé par trois ponts en H. Chacun de ces ponts comporte quatre interrupteurs et alimente l'un des trois enroulements de la machine électrique.

Pendant la charge triphasée, les trois phases du réseau électrique sont connectées aux points milieux des enroulements du stator. Par la commande, un équilibrage des courants circulant dans les demi-enroulements homologues est assuré. Chaque couple « bobine/ bobine duale » voit donc un même champ magnétique rotorique. De plus, la bobine et la bobine duale sont parcourues par des courants en opposition de phase, de sorte que les efforts se compensent. La machine électrique reste alors à vitesse de rotation nulle pendant la charge.

Un dispositif électrique combiné d'alimentation et de charge est divulgué dans le document FR 2 938 711.

Il existe un besoin pour un chargeur de batterie partageant le plus grand nombre possible de composants avec l'alimentation électrique d'un moteur électrique.

L'invention a pour objet un chargeur de batterie pour un véhicule automobile électrique ou hybride, comprenant un convertisseur continu-continu connecté d'une part à la batterie et d'autre part à un onduleur et des inductances d'un moteur électrique connectées à l'onduleur, l'onduleur étant apte à être connecté à un réseau d'alimentation électrique afin de charger la batterie. L'onduleur comprend au moins trois paires de bras pair et impair, les bras pairs étant connectés en parallèle au convertisseur continu-continu, les bras impairs étant connectés en parallèle par une de leurs extrémités à une borne d'un premier interrupteur, et par leur autre extrémité à une borne d'un deuxième interrupteur, l'autre borne du premier interrupteur et l'autre borne du deuxième interrupteur étant connectées au convertisseur continu-continu. A titre indicatif, ces deux interrupteurs sont des contacteurs de puissance, des transistors ou formés chacun par deux thyristors en parallèle montés en tête-bêche (TRIAC). Ils seront notés TRIAC par la suite. Chaque bras comprend un premier transistor connecté par son émetteur à un point milieu, le point milieu étant connecté au collecteur d'un deuxième transistor, une première diode étant connectée par sa cathode au collecteur du premier transistor, et par son anode à l'émetteur du premier transistor, une deuxième diode étant connectée par sa cathode au collecteur du deuxième transistor, et par son anode à l'émetteur du deuxième transistor. Chaque inductance du moteur électrique est connectée entre le point milieu d'un bras pair et celui d'un bras impair. Le chargeur de batterie est par ailleurs apte à alimenter le moteur électrique à partir de l'énergie emmagasinée dans la batterie lors du déplacement du véhicule.

Pour charger la batterie lorsque le réseau d'alimentation électrique est monophasé, le premier TRIAC peut être en position ouverte et le deuxième TRIAC peut être en position fermée. Le réseau d'alimentation électrique monophasé peut être connecté entre les points milieu de deux bras impairs. Les transistors des bras impairs aux points milieu desquels le réseau d'alimentation électrique étant connecté peuvent être en position ouverte. Les transistors des bras pairs dont le point milieu est connecté par une inductance du moteur électrique à un point milieu d'un bras impair auquel le réseau d'alimentation électrique est connecté, peuvent être en position ouverte, le premier transistor des autres bras impairs pouvant être en position fermée, le deuxième transistor des autres bras impairs pouvant être en position ouverte, les transistors des autres bras pairs restants pouvant être modulés en largeur d'impulsion pour corriger le facteur de puissance. Pour charger la batterie lorsque le réseau d'alimentation électrique est monophasé, le premier et le deuxième TRIAC peuvent être en position ouverte, le réseau d'alimentation électrique monophasé pouvant être connecté entre les points milieu de deux bras impairs, les transistors des bras pairs aux points milieu desquels le réseau d'alimentation électrique est connecté, pouvant être en position ouverte, les transistors des bras impairs dont le point milieu est connecté par une inductance du moteur électrique à un point milieu d'un bras pair auquel le réseau d'alimentation électrique est connecté, pouvant être modulés en largeur d'impulsion, les transistors des autres bras pouvant être en position ouverte.

Pour charger la batterie lorsque le réseau d'alimentation électrique est monophasé, le premier et le deuxième TRIAC peuvent être en position fermée, le réseau d'alimentation électrique monophasé pouvant être connecté entre les points milieu de deux bras pairs, les transistors des bras pairs aux points milieu desquels le réseau d'alimentation électrique est connecté, pouvant être en position ouverte, les transistors des bras impairs dont le point milieu est connecté par une inductance du moteur électrique à un point milieu d'un bras pair auquel le réseau d'alimentation électrique est connecté, pouvant être modulés en largeur d'impulsion, les transistors des autres bras pouvant être en position ouverte.

Pour charger la batterie lorsque le réseau d'alimentation électrique est triphasé, le premier TRIAC et le deuxième TRIAC peuvent être en position ouverte, chaque phase du réseau d'alimentation électrique triphasé pouvant être connectée à un point milieu d'un bras pair, les transistors des bras pairs auxquels sont connectées les phases du réseau, pouvant être en position ouverte, les transistors des bras impairs dont le point milieu est connecté par une inductance à un point milieu d'un bras pair auquel le réseau d'alimentation électrique est connecté, pouvant être modulés en largeur d'impulsion. Les bras impairs connectés directement ou par l'intermédiaire d'une inductance du moteur électrique peuvent former un onduleur modulé en largeur d'impulsion connecté au condensateur, l'onduleur modulé en largeur d'impulsion pouvant être apte à corriger le facteur de puissance et à compenser le courant harmonique généré par la charge de la batterie en injectant un courant de même amplitude et de phase opposée à celles du courant harmonique de charge.

Pour alimenter le moteur électrique lors de la traction, le premier TRIAC et le deuxième TRIAC peuvent être en position fermée, l'onduleur pouvant être commandé de sorte à générer des courants d'alimentation des inductances du moteur électrique.

Le chargeur de batterie présente l'avantage d'une charge alimentée par un réseau triphasé ou monophasé.

Le chargeur de batterie présente l'avantage d'une adaptation automatique à l'évolution de la charge et du réseau, une réduction des perturbations en mode commun et un filtrage plus aisé et moins couteux côté réseau.

De plus, vu sa structure bidirectionnelle, le chargeur assure la fonction V2G (acronyme anglais pour « vehicle-to-grid », soit « véhicule au réseau » en langue française).

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un chargeur de batterie selon l'invention,
- la figure 2 illustre le schéma équivalent des principaux éléments d'un tel chargeur de batterie configuré pour la traction,
- la figure 3 illustre le schéma équivalent des principaux éléments d'un tel chargeur de batterie configuré pour une charge alimentée par un réseau d'alimentation électrique triphasé,
- la figure 4 illustre le schéma équivalent des principaux éléments d'un tel chargeur de batterie configuré pour une charge alimentée par un réseau d'alimentation électrique monophasé, et
- la figure 5 illustre le schéma équivalent des principaux éléments d'un tel chargeur de batterie configuré pour une charge alimentée par un réseau d'alimentation électrique monophasé avec filtre actif parallèle.

La chaîne de traction d'un véhicule électrique VE comprend une batterie 1, un convertisseur continu-continu 2 (également appelé convertisseur DC/DC), un onduleur 3 et un moteur électrique.

Le chargeur de batterie permet de réutiliser la puissance de l'onduleur 3 embarqué pour alimenter le moteur électrique lors de la traction du véhicule et la mettre à profit pour une charge rapide de la batterie 1 si l'on dispose d'un réseau électrique triphasé ou d'une charge normale dans le cas d'un réseau monophasé.

L'onduleur 3 est formé par six cellules de commutation, également appelées « bras », portant les références 5 à 10 formant, deux à deux, trois ponts en H portant les références 11 à 13.

Le convertisseur continu-continu est connecté d'une part à la batterie 1 et d'autre part à l'onduleur 3. Des inductances (L1, L2, L3) d'un moteur électrique 4 sont par ailleurs connectées à l'onduleur 3.

L'onduleur 3 est apte à être connecté à un réseau d'alimentation électrique 15 afin de charger la batterie 1.

L'onduleur comprend au moins trois paires de bras pair et impair.

Les bras pairs sont connectés en parallèle au convertisseur continu-continu 2. Les bras impairs sont connectés en parallèle par une de leurs extrémités à une borne d'un premier TRIAC (Acronyme anglais pour « Triode for Alternating Current », soit « triode pour courant alternatif » en langue française) T1, et par leur autre extrémité à une borne d'un deuxième TRIAC T2, l'autre borne du premier TRIAC T1 et du deuxième TRIAC T2 étant connectées au convertisseur continu-continu 2.

Chaque bras comprend un premier transistor connecté par son émetteur à un point milieu connecté par ailleurs au collecteur d'un deuxième transistor. Une première diode est connectée par sa cathode au collecteur du premier transistor, et par son anode à l'émetteur du premier transistor. Une deuxième diode est connectée de manière similaire, sa cathode étant connectée au collecteur du deuxième transistor, et par son anode à l'émetteur du deuxième transistor,

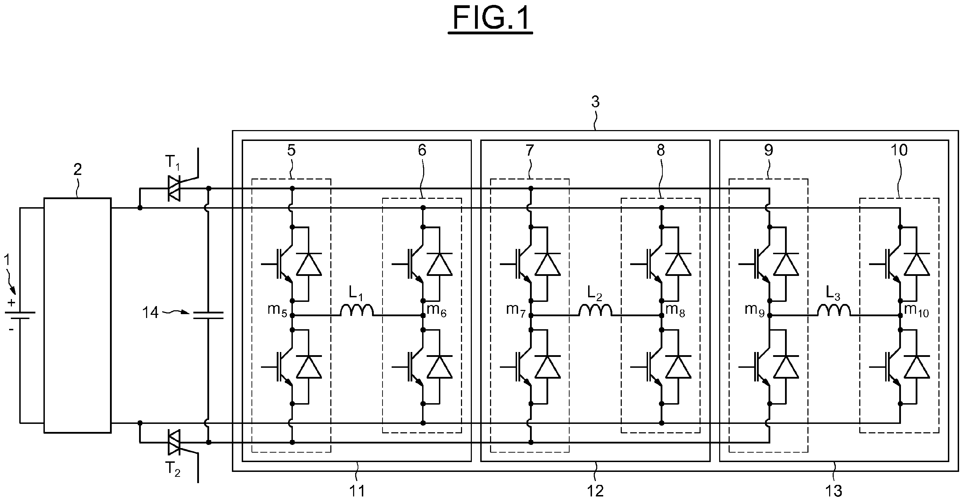

Sur la figure 1, on peut voir que la première inductance L1 du moteur électrique est connectée entre le point milieu m₅ du bras 5 et le point milieu m₆ du bras 6, la deuxième inductance L2 étant connectée entre le point milieu m₇ du bras 7 et le point milieu m₈ du bras 8, la troisième inductance L3 étant connectée entre le point milieu m₉ du bras 9 et le point milieu m₁₀ du bras 10.

Par rapport à un onduleur triphasé classique à 3 cellules de commutation, la structure en pont en H permet d'avoir une tension plus grande aux bornes des inductances du moteur électrique et permet donc de réduire les courants et les pertes dans les transistors et les diodes de chaque bras

Les interrupteurs sont bidirectionnels en courant et unidirectionnels en tension. Ils sont formés par des composants semiconducteurs commandés à la fermeture et à l'ouverture tel que des transistors bipolaires à grille isolée (acronyme anglais IGBT pour « insulated grid bipolar transistor ») ou des thyristors à extinction par la grille GTO (acronyme anglais pour « Gate Turn-Off Thyristor »), connectés en antiparallèle avec une diode.

Les fonctionnements en mode traction, en mode charge triphasé et en mode charge monophasé sont détaillés par la suite.

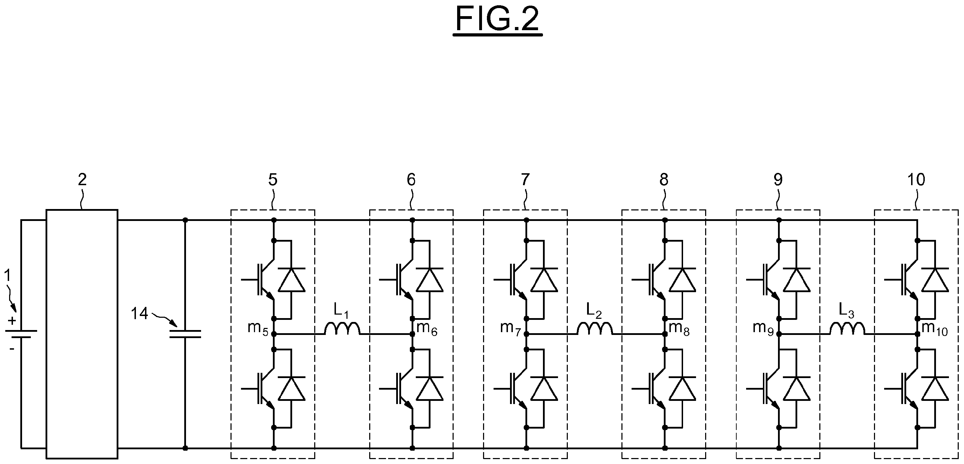

En se référant à la figure 1 illustrant la structure du chargeur, on configure le chargeur en mode traction en commandant les TRIACs T1 et T2 en position fermée (passants). Les inductances L1-L3 de la machine électrique sont ainsi alimentées par l'onduleur 3. Le schéma équivalent du chargeur ainsi configuré pour la traction est illustré par la figure 2.

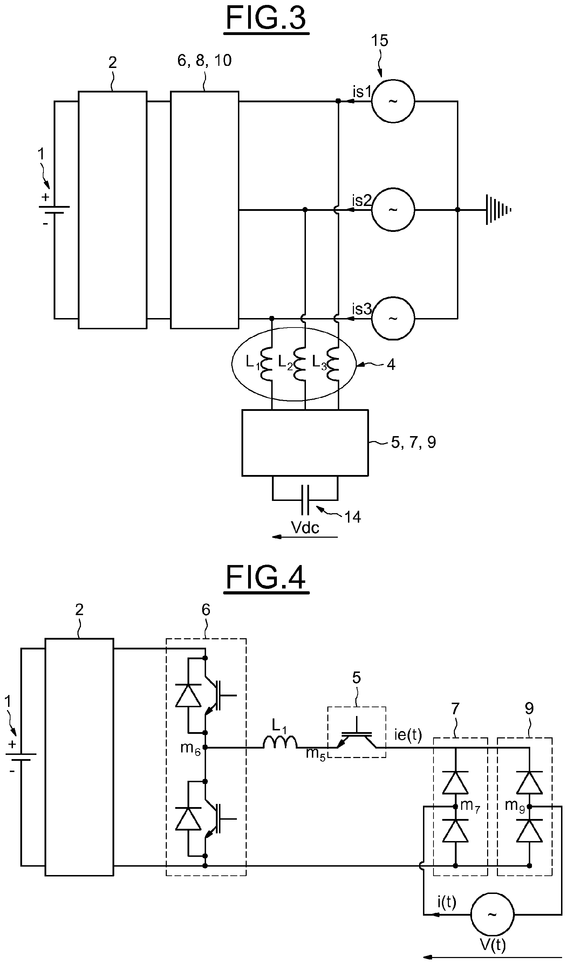

En se référant à la figure 1 illustrant la structure du chargeur, on configure le chargeur en mode de fonctionnement de charge triphasée, en commandant les TRIACs T1 et T2 en position ouverte (bloqués), c'est-à-dire qu'ils ne sont pas passants. Le schéma équivalent du chargeur ainsi configuré pour une charge alimentée par un réseau d'alimentation électrique triphasé est illustré par la figure 3.

Les trois phases d'un réseau d'alimentation électrique 15 sont connectées respectivement aux points milieu du sixième bras m6, du huitième bras m8 et du dixième bras m10.

Les bras 6, 8 et 10 forment donc un pont triphasé à six diodes permettant de redresser le courant et la tension prélevés du réseau d'alimentation électrique 15 triphasé. Le convertisseur DC/DC bidirectionnel 2 joue le rôle d'abaisseur de tension permettant d'adapter les tensions et de contrôler le courant de charge de la batterie.

Pour assurer le bon fonctionnement du système, la tension de la batterie 1 doit être inférieure à la tension minimale en entrée du convertisseur DC/DC 2 bidirectionnel soit 465V pour une tension efficace entre phases de 380Vac (√(3/2)*380V=465V). Si cette condition n'est pas respectée, cette contrainte peut être résolue en remplaçant le convertisseur DC/DC 2 bidirectionnel employé en élévateur de tension par un convertisseur à deux étages associant par exemple un abaisseur de tension à un élévateur de tension.

Afin de respecter les normes CEI (61000-3-2 ou 61000-3-12) et IEEE (519-1992) traitant de la qualité du réseau électrique, les bras 5, 7 et 9 forment un onduleur triphasé modulé en largeur d'impulsion MLI assumant le rôle d'un filtre actif parallèle FAP. Un tel filtre permet de corriger le facteur de puissance du chargeur de batterie vu depuis le réseau d'alimentation électrique et de compenser les courants harmoniques générés par la charge de la batterie. Le but est d'injecter un courant de même amplitude et de phase opposée à celles du courant de charge de la batterie, compensant les harmoniques de ce dernier. L'ensemble charge/filtre se présente alors sur le réseau comme une charge qui absorbe un courant sinusoïdal.

Le rôle du filtre actif parallèle FAP est d'empêcher les courants perturbateurs (harmoniques, réactifs et déséquilibrés) produits par le chargeur, de circuler à travers l'impédance du réseau, située en amont du point de connexion du filtre actif.

La puissance maximale du filtre actif est de 30% de la puissance de charge, soit de 7 kW pour une charge triphasée de 22kW.

Le condensateur 14, en aval du FAP par rapport au réseau d'alimentation électrique 15, joue le rôle d'une source de tension continue. En régime permanent, il maintient la tension du bus continu constante avec des faibles oscillations. Il sert aussi d'élément de stockage d'énergie pour compenser la différence de puissance réelle entre la charge et la source lors des périodes transitoires.

D'autre part, les enroulements L1-L3 du moteur électrique sont utilisés pour connecter le FAP en parallèle avec le réseau d'alimentation électrique 15 et lui faire remplir le rôle de source de courant. Ils jouent le rôle de filtre de premier ordre assurant le transfert de l'énergie entre le Point Commun de Connexion (PCC) et le FAP. Le point commun de connexion est situé à la connexion des enroulements du moteur électrique avec le réseau d'alimentation électrique. Ces enroulements sont parcourus par des courants à fréquences élevées (5*50Hz, 7*50Hz, 11*50Hz,...). Vue l'inertie du rotor, le champ tournant statorique ne peut pas créer de couple et la machine reste à vitesse nulle pendant la charge.

Le FAP peut être commandé en utilisant seulement la mesure des courants source is1 à is3 et de la tension Vdc mesurée aux bornes du condensateur 14.

Dans une première boucle de régulation utilisant un correcteur proportionnel-intégral par exemple, on régule la tension Vdc à une valeur sensiblement continue, notamment de l'ordre de deux fois la tension du réseau. En effet le contrôle du bus continu est indispensable pour la commande du FAP. Pour cela, la tension moyenne Vdc aux bornes du condensateur 14 doit être maintenue à une valeur fixe.

On obtient le courant Isq sur l'axe q en quadrature et le courant Isd sur l'axe direct d par une transformation dans le plan de Park en fonction des mesures des courants is1 à is3, Isq et Isd correspondant aux valeurs des courants is1 à is3 dans le plan de Park tournant à la fréquence du réseau d'alimentation.

On pose toutefois que la référence du courant Isq selon l'axe en quadrature q est nulle pour imposer une compensation totale de l'énergie réactive.

Par ailleurs, la tension de référence Vdcref est connue (800V).

On peut donc calculer la référence Isdref selon l'axe d direct en temps réel par des méthodes connues de l'homme du métier.

Avec une régulation de type proportionnel-intégral sur le courant Isd sur l'axe direct d d'une part et le courant Isq sur l'axe q en quadrature d'autre part, on obtient les commandes en tension Vd et Vq dans le plan de Park du FAP que l'on retransforme dans le domaine triphasé par transformée inverse de Park pour commander chacun les interrupteurs des bras pairs et impairs.

Lors des régimes transitoires, l'échange de puissance active entre la batterie, le réseau et le filtre actif se traduit par une variation de la tension continue aux bornes du condensateur 14. L'équilibre de puissance est établi grâce à l'intervention du régulateur de tension.

En régime permanent, la puissance réelle générée par la source triphasée est égale à celle imposée par la charge ajoutée à une petite quantité de puissance pour compenser les pertes dans le FAP. La fluctuation de puissance en sortie du FAP est dans ce cas égale à la puissance harmonique de la charge.

En se référant à la figure 1 illustrant la structure du chargeur, on configure le chargeur en mode de fonctionnement de charge monophasée, en commandant le TRIAC T1 en position ouverte (bloqué) et le TRIAC T2 en position fermée (passant). Le schéma équivalent du chargeur ainsi configuré pour une charge alimentée par un réseau d'alimentation électrique monophasé est illustré par la figure 4.

Le réseau d'alimentation électrique monophasé est connecté entre les points milieu de deux bras reliés par une inductance du moteur électrique, par exemple entre les points milieu du septième bras m7 et du neuvième bras m9. Les bras 7 et 9 forment alors un pont non commandé à 4 diodes. Par ailleurs, le bras 6 est utilisé comme un élévateur de tension pour contrôler la tension de sortie et corriger le facteur de puissance.

Pour que le courant i(t) prélevé sur le réseau soit sinusoïdal et en phase avec la tension v(t), il faut que le courant en sortie du pont à diodes ie(t) soit formé d'alternances positives de sinusoïdes.

Une inductance du moteur (L1) est donc parcourue par un courant de même polarité (positif). Il n'y a donc aucun risque de rotation du moteur.

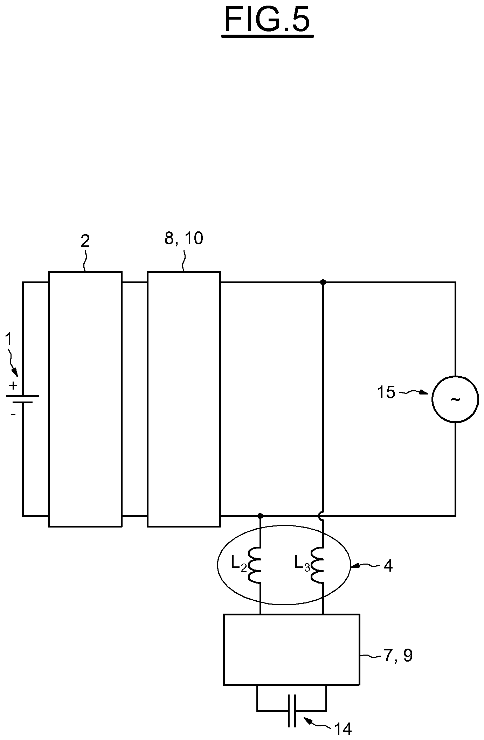

Notons aussi que dans le cas où le convertisseur DC/DC 2 est un convertisseur à deux étages, abaisseur et élévateur de tension (« Buck-Boost » en langue anglaise) réversible, la charge monophasée peut aussi être basée sur le principe de filtrage actif comme celui détaillé dans le cas triphasé. Le réseau d'alimentation électrique est connecté entre les points milieu m8 du huitième bras et du dixième bras m10. Le schéma équivalent d'un tel chargeur est illustré par la figure 5.

En conclusion, le système mixte décrit ci-dessus comprend les fonctions "traction" et "charge" qui sont intégrées au maximum. Indépendamment de l'alimentation électrique, le système peut bénéficier d'un filtrage actif parallèle (FAP).

En traction, une structure avec trois ponts en H et un convertisseur DC/DC est utilisée.

En charge, trois cellules de commutation sont utilisées pour former un pont à diodes triphasé. Les trois autres, raccordées au réseau à travers les enroulements de la machine électrique, se comportent comme une source de courant contrôlée capable de compenser l'énergie réactive et les harmoniques de courant absorbés par la charge. Les courants fournis par le réseau d'alimentation électrique sont alors sinusoïdaux.

La capacité 14 joue un rôle d'élément de stockage d'énergie. La tension à ses bornes doit être régulée.

Le passage entre le mode traction et le mode charge est réalisé par deux TRIACs.

Les enroulements du moteur sont parcourus par un courant à 5*50Hz, 7*50Hz, 11*50Hz,... Cela permet d'éviter le risque de rotation du rotor dans le cas d'une machine synchrone.

## Revendications

1. Chargeur de batterie pour un véhicule automobile électrique ou hybride, comprenant un convertisseur continu-continu (2) connecté d'une part à la batterie (1) et d'autre part à un onduleur (3) et des inductances (L1, L2, L3) d'un moteur électrique (4) connectées à l'onduleur (3),
l'onduleur (3) étant apte à être connecté à un réseau d'alimentation électrique (15) afin de charger la batterie (1),
**caractérisé par le fait que** l'onduleur (3) comprend au moins trois paires de bras pair et impair, les bras pairs étant connectés en parallèle au convertisseur continu-continu (2),
les bras impairs étant connectés en parallèle par une de leurs extrémités à une borne d'un premier interrupteur (T₁), et par leur autre extrémité à une borne d'un deuxième interrupteur (T₂), l'autre borne du premier interrupteur (T₁) et l'autre borne du deuxième interrupteur (T₂) étant connectées au convertisseur continu-continu (2),
chaque bras comprenant un premier transistor connecté par son émetteur à un point milieu, le point milieu étant connecté au collecteur d'un deuxième transistor, une première diode étant connectée par sa cathode au collecteur du premier transistor, et par son anode à l'émetteur du premier transistor, une deuxième diode étant connectée par sa cathode au collecteur du deuxième transistor, et par son anode à l'émetteur du deuxième transistor,
chaque inductance du moteur électrique (4) étant connectée entre le point milieu d'un bras pair et celui d'un bras impair,
le chargeur de batterie étant par ailleurs apte à alimenter le moteur électrique (4) à partir de l'énergie emmagasinée dans la batterie (1) lors du déplacement du véhicule.

2. Chargeur de batterie selon la revendication 1, dans lequel, pour charger la batterie lorsque le réseau d'alimentation électrique est monophasé, le premier interrupteur (T1) est en position ouverte et le deuxième interrupteur (T2) est en position fermée,
le réseau d'alimentation électrique (15) monophasé étant connecté entre les points milieu de deux bras impairs,
les transistors des bras impairs aux points milieu desquels le réseau d'alimentation électrique étant connecté sont en position ouverte,
les transistors des bras pairs dont le point milieu est connecté par une inductance du moteur électrique à un point milieu d'un bras impair auquel le réseau d'alimentation électrique est connecté, étant en position ouverte,
le premier transistor des autres bras impairs étant en position fermée, le deuxième transistor des autres bras impairs étant en position ouverte,
les transistors des autres bras pairs sont modulés en largeur d'impulsion pour corriger le facteur de puissance.

3. Chargeur de batterie selon la revendication 1, dans lequel, pour charger la batterie lorsque le réseau d'alimentation électrique est monophasé, le premier interrupteur (T1) et le deuxième interrupteur (T2) sont en position fermée,
le réseau d'alimentation électrique (15) monophasé étant connecté entre les points milieu de deux bras pairs,
les transistors des bras pairs aux points milieu desquels le réseau d'alimentation électrique est connecté, étant en position ouverte,
les transistors des bras impairs dont le point milieu est connecté par une inductance du moteur électrique à un point milieu d'un bras pair auquel le réseau d'alimentation électrique est connecté, étant commandés en modulation de largeur d'impulsion,
les transistors des autres bras étant en position ouverte.

4. Chargeur de batterie selon la revendication 1, dans lequel, pour charger la batterie lorsque le réseau d'alimentation électrique est monophasé, le premier interrupteur (T1) et le deuxième interrupteur (T2) sont en position ouverte,
le réseau d'alimentation électrique (15) monophasé étant connecté entre les points milieu de deux bras pairs,
les transistors des bras pairs aux points milieu desquels le réseau d'alimentation électrique est connecté, étant en position ouverte,
les transistors des bras impairs dont le point milieu est connecté par une inductance du moteur électrique à un point milieu d'un bras pair auquel le réseau d'alimentation électrique est connecté, étant commandés en modulation de largeur d'impulsion pour corriger le facteur de puissance,
les transistors des autres bras étant en position ouverte.

5. Chargeur de batterie selon la revendication 1, dans lequel, pour charger la batterie lorsque le réseau d'alimentation électrique est triphasé, le premier interrupteur (T1) et le deuxième interrupteur (T2) sont en position ouverte,
chaque phase du réseau d'alimentation électrique triphasé étant connectée à un point milieu d'un bras pair,
les transistors des bras pairs auxquels sont connectées les phases du réseau, étant en position ouverte,
les transistors des bras impairs dont le point milieu est connecté par une inductance à un point milieu d'un bras pair auquel le réseau d'alimentation électrique est connecté, étant modulé en largeur d'impulsion

6. Chargeur de batterie selon l'une quelconque des revendications 4 ou 5, dans lequel les bras impairs connectés directement ou par l'intermédiaire d'une inductance du moteur électrique forment un onduleur modulé en largeur d'impulsion connecté au condensateur 14,
l'onduleur modulé en largeur d'impulsion étant apte à corriger le facteur de puissance et à compenser le courant harmonique généré par la charge de la batterie en injectant un courant de même amplitude et de phase opposée à celles du courant harmonique de charge.

7. Chargeur de batterie selon la revendication 1, dans lequel pour alimenter le moteur électrique lors de la traction, le premier interrupteur (T1) et le deuxième interrupteur (T2) sont en position fermée, l'onduleur étant commandé de sorte à générer des courants d'alimentation des inductances du moteur électrique.

## Patentansprüche

1. Batterieladegerät für ein elektrisches oder hybrides Kraftfahrzeug, umfassend einen DC/DC-Wandler (2), der einerseits an die Batterie (1) und andererseits an einen Wechselrichter (3) angeschlossen ist, und Induktanzen (L1, L2, L3) eines Elektromotors (4), die an den Wechselrichter (3) angeschlossen sind,
wobei der Wechselrichter (3) geeignet ist, an ein elektrisches Versorgungsnetz (15) angeschlossen zu werden, um die Batterie (1) aufzuladen,
**dadurch gekennzeichnet, dass** der Wechselrichter (3) mindestens drei Paare von geraden und ungeraden Armen umfasst, wobei die geraden Arme parallel an den DC/DC-Wandler (2) angeschlossen sind,
wobei die ungeraden Arme parallel mit einem ihrer Enden an eine Klemme eines ersten Schalters (T₁) und mit ihrem anderen Ende an eine Klemme eines zweiten Schalters (T₂) angeschlossen sind, wobei die andere Klemme des ersten Schalters (T₁) und die andere Klemme des zweiten Schalters (T₂) an den DC/DC-Wandler (2) angeschlossen sind,
wobei jeder Arm einen ersten Transistor umfasst, der mit seinem Sender an einen Mittelpunkt angeschlossen ist, wobei der Mittelpunkt an den Kollektor eines zweiten Transistors angeschlossen ist, wobei eine erste Diode mit ihrer Kathode an den Kollektor des ersten Transistors und mit ihrer Anode an den Sender des ersten Transistors angeschlossen ist wobei eine zweite Diode mit ihrer Kathode an den Kollektor des zweiten Transistors und mit ihrer Anode an den Sender des zweiten Transistors angeschlossen ist,
wobei jede Induktanz des Elektromotors (4) zwischen dem Mittelpunkt eines geraden Arms und jenem eines ungeraden Arms angeschlossen ist,
wobei das Batterieladegerät überdies geeignet ist, den Elektromotor (4) von der in der Batterie (1) bei der Verlagerung des Fahrzeugs gespeicherten Energie zu versorgen.

2. Batterieladegerät nach Anspruch 1, bei dem, um die Batterie zu laden, wenn das elektrische Versorgungsnetz einphasig ist, der erste Schalter (T1) in offener Position ist und der zweite Schalter (T2) in geschlossener Position ist,
wobei das einphasige elektrische Versorgungsnetz (15) zwischen den Mittelpunkten von zwei ungeraden Armen angeschlossen ist,
wobei die Transistoren der ungeraden Arme, an deren Mittelpunkten, wobei das elektrische Versorgungsnetz angeschlossen ist, in offener Position sind,
wobei die Transistoren der geraden Arme, deren Mittelpunkt durch eine Induktanz des Elektromotors an einen Mittelpunkt eines ungeraden Arms angeschlossen ist, an den das elektrische Versorgungsnetz angeschlossen ist, in offener Position sind,
wobei der erste Transistor der anderen ungeraden Arme in geschlossener Position ist, wobei der zweite Transistor der anderen ungeraden Arme in offener Position ist,
wobei die Transistoren der anderen geraden Arme in der Impulsbreite moduliert sind, um den Leistungsfaktor zu korrigieren.

3. Batterieladegerät nach Anspruch 1, bei dem, um die Batterie zu laden, wenn das elektrische Versorgungsnetz einphasig ist, der erste Schalter (T1) und der zweite Schalter (T2) in geschlossener Position sind,
wobei das einphasige elektrische Versorgungsnetz (15) zwischen den Mittelpunkten von zwei geraden Armen angeschlossen ist,
wobei die Transistoren der geraden Arme, an deren Mittelpunkten das elektrische Versorgungsnetz angeschlossen ist, in offener Position sind,
wobei die Transistoren der ungeraden Arme, deren Mittelpunkt durch eine Induktanz des Elektromotors an einen Mittelpunkt eines geraden Arms angeschlossen ist, an den das elektrische Versorgungsnetz angeschlossen ist, hinsichtlich einer Impulsbreitenmodulation gesteuert werden,
wobei die Transistoren der anderen Arme in offener Position sind.

4. Batterieladegerät nach Anspruch 1, bei dem, um die Batterie zu laden, wenn das elektrische Versorgungsnetz einphasig ist, der erste Schalter (T1) und der zweite Schalter (T2) in offener Position sind,
wobei das einphasige elektrische Versorgungsnetz (15) zwischen den Mittelpunkten von zwei geraden Armen angeschlossen ist,
wobei die Transistoren der geraden Arme, an deren Mittelpunkten das elektrische Versorgungsnetz angeschlossen ist, in offener Position sind,
wobei die Transistoren der ungeraden Arme, deren Mittelpunkt durch eine Induktanz des Elektromotors an einen Mittelpunkt eines geraden Arms angeschlossen ist, an den das elektrische Versorgungsnetz angeschlossen ist, hinsichtlich einer Impulsbreitenmodulation gesteuert werden, um den Leistungsfaktor zu korrigieren,
wobei die Transistoren der anderen Arme in offener Position sind.

5. Batterieladegerät nach Anspruch 1, bei dem, um die Batterie zu laden, wenn das elektrische Versorgungsnetz dreiphasig ist, der erste Schalter (T1) und der zweite Schalter (T2) in offener Position sind,
wobei jede Phase des dreiphasigen elektrischen Versorgungsnetzes an einen Mittelpunkt eines geraden Arms angeschlossen ist,
wobei die Transistoren der geraden Arme, an die die Phasen des Netzes angeschlossen sind, in offener Position sind,
wobei die Transistoren der ungeraden Arme, deren Mittelpunkt durch eine Induktanz an einen Mittelpunkt eines geraden Arms angeschlossen ist, an den das elektrische Versorgungsnetz angeschlossen ist, in der Impulsbreite moduliert sind.

6. Batterieladegerät nach einem der Ansprüche 4 oder 5, bei dem die ungeraden Arme, die direkt oder über eine Induktanz des Elektromotors angeschlossen sind, einen in der Impulsbreite modulierten Wechselrichter bilden, der an den Kondensator 14 angeschlossen ist,
wobei der in der Impulsbreite modulierte Wechselrichter geeignet ist, den Leistungsfaktor zu korrigieren und den durch das Laden der Batterie erzeugten harmonischen Strom auszugleichen, wobei er einen Strom mit derselben Amplitude und mit entgegengesetzter Phase zu jenen des harmonischen Ladestroms einleitet.

7. Batterieladegerät nach Anspruch 1, bei dem, um den Elektromotor bei der Traktion zu versorgen, der erste Schalter (T1) und der zweite Schalter (T2) in geschlossener Position sind, wobei der Wechselrichter gesteuert wird, um Versorgungsströme der Induktanzen des Elektromotors zu erzeugen.

## Claims

1. Battery charger for an electric or hybrid motor vehicle, comprising a DC-to-DC converter (2) connected to the battery (1), on the one hand, and to an inverter (3), on the other hand, and inductors (L1, L2, L3) of an electric motor (4) that are connected to the inverter (3),
the inverter (3) being able to be connected to an electric power supply network (15) in order to charge the battery (1),
**characterized in that** the inverter (3) comprises at least three pairs of even and odd arms, the even arms being connected in parallel to the DC-to-DC converter (2),
the odd arms being connected in parallel by one of their ends to a terminal of a first switch (T₁), and by their other end to a terminal of a second switch (T₂), the other terminal of the first switch (T₁) and the other terminal of the second switch (T₂) being connected to the DC-to-DC converter (2),
each arm comprising a first transistor connected by its emitter to a centre tap, the centre tap being connected to the collector of a second transistor, a first diode being connected by its cathode to the collector of the first transistor, and by its anode to the emitter of the first transistor, a second diode being connected by its cathode to the collector of the second transistor, and by its anode to the emitter of the second transistor,
each inductor of the electric motor (4) being connected between the centre tap of an even arm and that of an odd arm,
the battery charger moreover being able to supply power to the electric motor (4) from the energy stored in the battery (1) when the vehicle is moving.

2. Battery charger according to Claim 1, wherein, to charge the battery when the electric power supply network is single-phase, the first switch (T1) is in the open position and the second switch (T2) is in the closed position,
the single-phase electric power supply network (15) being connected between the centre taps of two odd arms,
the transistors of the odd arms, to the centre taps of which the electric power supply network being connected, are in the open position,
the transistors of the even arms, whose centre tap is connected by an inductor of the electric motor to a centre tap of an odd arm to which the electric power supply network is connected, being in the open position,
the first transistor of the other odd arms being in the closed position, the second transistor of the other odd arms being in the open position,
the transistors of the other even arms are pulse-width modulated in order to correct the power factor.

3. Battery charger according to Claim 1, wherein, to charge the battery when the electric power supply network is single-phase, the first switch (T1) and the second switch (T2) are in the closed position,
the single-phase electric power supply network (15) being connected between the centre taps of two even arms,
the transistors of the even arms, to the centre taps of which the electric power supply network is connected, being in the open position,
the transistors of the odd arms, whose centre tap is connected by an inductor of the electric motor to a centre tap of an even arm to which the electric power supply network is connected, being commanded using pulse width modulation,
the transistors of the other arms being in the open position.

4. Battery charger according to Claim 1, wherein, to charge the battery when the electric power supply network is single-phase, the first switch (T1) and the second switch (T2) are in the open position,
the single-phase electric power supply network (15) being connected between the centre taps of two even arms,
the transistors of the even arms, to the centre taps of which the electric power supply network is connected, being in the open position,
the transistors of the odd arms, whose centre tap is connected by an inductor of the electric motor to a centre tap of an even arm to which the electric power supply network is connected, being commanded using pulse width modulation in order to correct the power factor,
the transistors of the other arms being in the open position.

5. Battery charger according to Claim 1, wherein, to charge the battery when the electric power supply network is three-phase, the first switch (T1) and the second switch (T2) are in the open position,
each phase of the three-phase electric power supply network being connected to a centre tap of an even arm,
the transistors of the even arms, to which the phases of the network are connected, being in the open position,
the transistors of the odd arms, whose centre tap is connected by an inductor to a centre tap of an even arm to which the electric power supply network is connected, being pulse-width modulated.

6. Battery charger according to either one of Claims 4 and 5, wherein the odd arms connected directly or by way of an inductor of the electric motor form a pulse-width modulated inverter connected to the capacitor 14,
the pulse-width modulated inverter being able to correct the power factor and to compensate the harmonic current generated by the charging of the battery by injecting a current having the same amplitude as and opposite phase to those of the charging harmonic current.

7. Battery charger according to Claim 1, wherein, to supply power to the electric motor during traction, the first switch (T1) and the second switch (T2) are in the closed position, the inverter being commanded so as to generate currents for supplying power to the inductors of the electric motor.
